Europäisches Patentamt

European Patent Office

Office européen des brevets

(11) Veröffentlichungsnummer: **0 036 964**
**B1**

# EUROPÄISCHE PATENTSCHRIFT

(45) Veröffentlichungstag der Patentschrift:
**05.12.84**

(21) Anmeldenummer: **81101582.5**

(22) Anmeldetag: **05.03.81**

(51) Int. Cl.³: **B 27 B 5/34**, B 27 B 5/04

(54) Mehrblattkreissägemaschine.

(30) Priorität: **27.03.80 DE 3011926**

(43) Veröffentlichungstag der Anmeldung:
**07.10.81 Patentblatt 81/40**

(45) Bekanntmachung des Hinweises auf die Patenterteilung:
**05.12.84 Patentblatt 84/49**

(84) Benannte Vertragsstaaten:
**AT BE CH FR GB IT LI LU NL SE**

(56) Entgegenhaltungen:
**DE - C - 839 702**
**US - A - 1 977 971**

(73) Patentinhaber: **Interholz Technik GmbH, Basler Landstrasse 30, D-7800 Freiburg (DE)**

(72) Erfinder: **Volk, Karl, Merzhauser Strasse 88, D-7800 Freiburg / Brsg. (DE)**

(74) Vertreter: **Eitle, Werner, Dipl.-Ing. et al, Hoffmann, Eitle & Partner Patentanwälte Arabellastrasse 4, D-8000 München 81 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft eine Mehrblattkreissägemaschine, mit mindestens zwei auf einer motorisch angetriebenen Welle in einem bestimmten Abstand zueinander drehfest angeordneten Kreissägeblättern, von denen mindestens eines über einen an sich bekannten feststellbaren Verschiebekopf in Längsrichtung der Antriebswelle verschiebbar ist, einer sich unterhalb der Kreissägeblätter erstreckenden Transportkette zum kontinuierlichen Durchschub der zu sägenden Werkstücke, sowie einer die Werkstücke beim Sägevorgang am Abheben von der Transportkette hindernden Niederhaltereinrichtung, die für jedes Sägeblatt jeweils eine getrennte Niederhalterlamelle umfasst, welche mit dem jeweils zugeordneten Verschiebekopf derart verbunden ist, dass sie zusammen mit diesem in eine bestimmte Stellung verschiebbar und in dieser Stellung feststellbar ist.

Mehrblattkreissägemaschinen dieser Art haben den Vorteil, dass sie für eine Vielzahl unterschiedlicher Bearbeitungsarten eingesetzt werden können. So ist es mit derartigen Sägemaschinen möglich, Schnitte längs und quer zur Holzfaser durchzuführen, d.h. neben dem Besäumen, dem Zerlegen von Rohholzbreiten in Nutzbreiten zur Erzeugung von Kanteln, Rohfriesen, Leisten und dergleichen auch Abläng-, Aufteil- und Einritzarbeiten durchzuführen.

Da je nach Bearbeitungsart die Werkstücke in unterschiedlicher Weise am Abheben von der Transportkette gehindert werden müssen, werden für die verschiedenen Bearbeitungsarbeiten bisher auch unterschiedliche Niederhaltereinrichtungen eingesetzt, die jedoch jeweils nur für die spezielle Bearbeitungsart optimale Ergebnisse erbringen.

So offenbart beispielsweise die US-A-1 977 971 eine Mehrblattkreissägemaschine, die im dargestellten und beschriebenen Ausführungsbeispiel zum Ablängen von Werkstücken eingesetzt wird und deshalb mit einer speziellen, lediglich für das Ablängen geeigneten Niederhaltereinrichtung ausgestattet ist. Diese spezielle Niederhaltereinrichtung hat allerdings den Vorteil, dass ihre Niederhalterlamellen jeweils mit dem zugeordneten Verschiebekopf verbunden sind, so dass bei einer Umstellung der Sägemaschine auf andere Ablängmasse eine spezielle Einstellung der Niederhalterlamellen nicht erforderlich ist.

Die DE-C-839 702 wiederum offenbart eine Mehrblattkreissägemaschine, die mit einer zum Besäumen, Leistenschneiden und Ritzen geeigneten Niederhaltereinrichtung ausgestattet ist. Je nach Bearbeitungsart kann dabei die dem Sägeblatt jeweils zugekehrte Druckrolle des Druckrollenpaares durch einen Druckschuh ersetzt werden. Hierzu sind allerdings Umstellarbeiten erforderlich, die wegen der durch das Gehäuse beengten Platzverhältnisse eine gewisse Geschicklichkeit erfordern. Auch sind die Niederhaltereinrichtungen aufgrund des zugrundeliegenden konstruktiven Konzeptes relativ breit, so dass eine Reduzierung des Sägeblattabstandes auf weniger als 90 mm nicht möglich ist. Einen nicht unerheblichen Aufwand erfordert auch das Einstellen der Niederhaltereinrichtungen auf eine neue Schnittbreite, da die Niederhaltereinrichtungen am Maschinengehäuse befestigt sind und dem jeweiligen Sägeblattabstand speziell angepasst werden müssen.

Aufgabe der vorliegenden Erfindung ist es, eine Mehrblattkreissägemaschine der eingangs genannten Art derart weiterzubilden, dass die Niederhaltereinrichtung bei ellen Bearbeitungsarten die Werkstücke in optimaler Weise am Abheben von der Transportkette hindert und eine stufenlose Verstellmöglichkeit über die gesamte Schnittbreite ohne Montage-, Einstell- oder Umrüstarbeiten ermöglicht.

Diese Aufgabe wird erfindungsgemäss dadurch gelöst, dass jede Niederhalterlamelle in an sich bekannter Weise einen in Lamellenlängsrichtung verlaufenden Schlitz besitzt, durch den das jeweilige Sägeblatt hindurchragt, und dass die Niederhalterlamellen beidseitig des Sägeblattes mit jeweils mindestens einer Druckrolle (11) versehen sind und an zwei jeweils die Lamellenenden durchdringenden Führungsstangen in Antriebswellenlängsrichtung geführt sind, welche sich parallel zur Antriebswelle erstrecken und im Bereich ihrer Enden an Pendelarmen angelenkt sind, die sich im wesentlichen senkrecht zu den Führungsstangen erstrecken.

Durch die erfindungsgemässen Merkmale ist eine Mehrblattkreissäge geschaffen, deren Niederhaltereinrichtung die gesamte Schnittbreite abdeckt und derart konzepiert ist, dass bei allen Bearbeitungsarten die Werkstücke stets an derjenigen Stelle am Abheben von der Transportkette gehindert werden, an der die Schnittkräfte wirksam sind. Darüberhinaus ermöglicht das erfindungsgemässe Konzept eine stufenlose Verstellmöglichkeit über die gesamte Schnittbreite, ohne dass hierfür zusätzliche Montage-, Einstell- oder Umrüstarbeiten erforderlich sind.

Gemäss einer vorteilhaften Weiterbildung der Erfindung wird ein Abheben des Werkstückes von der Transportkette noch dadurch erschwert, dass im Bereich der Enden jeder Niederhalterlamelle an den Führungsstangen in der Ebene des Sägeblattes jeweils eine zusätzliche Druckrolle gelagert ist.

Eine besonders volteilhafte Kopplung der Niederhalterlamellen mit dem Verschiebekopf wird gemäss einer Weiterbildung der Erfindung dadurch erreicht, dass die Verbindung jeweils über zwei sich senkrecht zur Transportkettenebene erstreckende Säulen erzielt wird, die zu beiden Seiten der Antriebswelle jeweils in einer Säulenführung am Verschiebekopf vertikal verschiebbar gelagert sind und jeweils an ihrem unteren Ende an der Niederhalterlamelle befestigt sind.

Im folgenden ist zur weiteren Erläuterung und zum besseren Verständnis ein Ausführungsbeispiel der Erfindung unter Bezugnahme auf die beigefügte Zeichnung näher beschrieben.

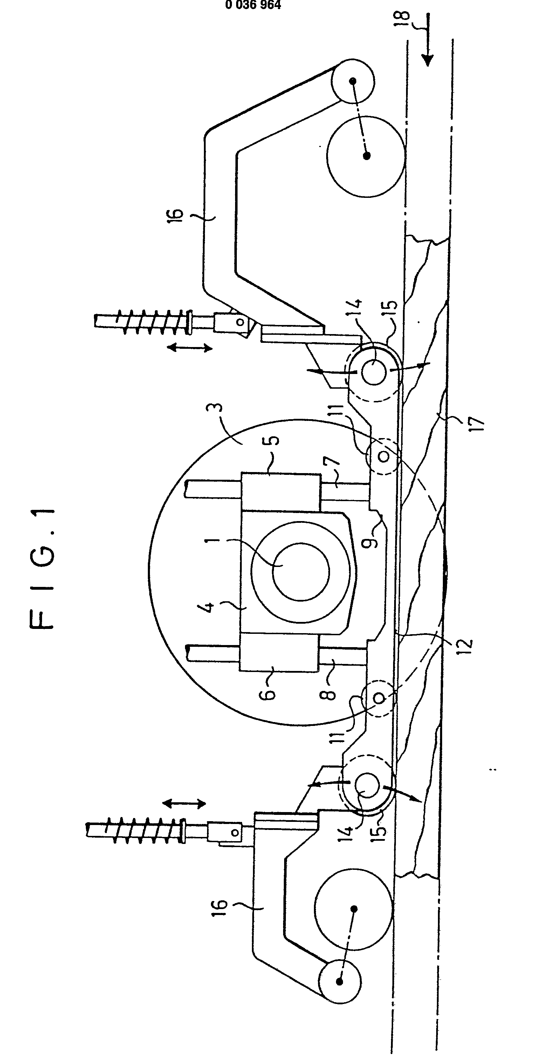

Fig. 1 zeigt schematisch einen Teil einer erfindungsgemässen Mehrblattkreissägemaschine mit Parallelbesäumeinrichtung bei motorischer oder elektrischer Blattverstellung, dargestellt in einer Seitenansicht, und

Fig. 2 zeigt schematisch den Maschinenteil gemäss Fig. 1 in einer Draufsicht.

Der Übersichtlichkeit halber sind in beiden Figuren nur die zum Verständnis der vorliegenden Erfindung notwendigen Teile einer Mehrblattkreissägemaschine mit Parallelbesäumeinrichtung dargestellt.

Wie aus den Figuren hervorgeht, sind auf einer durch einen nichtdargestellten Elektromotor angetriebenen Welle 1 in einem bestimmten Abstand zueinander drehfest zwei Kreissägeblätter 2 und 3 angeordnet. Im vorliegenden Ausführungsbeispiel ist das Kreissägeblatt 2 in Längsrichtung der Antriebswelle unverschiebbar auf dieser angeordnet. Das Kreissägeblatt 3 dagegen ist in einem Verschiebekopf 4 gelagert, der in Längsrichtung der Antriebswelle 1 verschiebbar und mittels nichtdargestellter Einrichtungen an der Maschine feststellbar ist.

Der Verschiebekopf 4 weist zu beiden Seiten der Antriebswelle 1 angeordnete Säulenführungen 5 und 6 auf, die Säulen 7 und 8 tragen, welche sich senkrecht zur Antriebswelle 1 erstrecken und an ihren unteren Enden mit einer Niederhalterlamelle 9 verbunden sind.

Die Niederhalterlamelle 9 weist in ihrer Mitte einen Schlitz 10 auf, durch den sich das Sägeblatt 3 hindurcherstreckt.

Die Niederhalterlamelle 9 ist darüber hinaus zu beiden Seiten des Schlitzes 10 mit insgesamt vier Rollen 11 ausgestattet, die ebenfalls in Schlitzen in der Niederhalterlamelle 9 gelagert sind und geringfügig über die Unterkante 12 der Lamelle 9 hinausragen.

Die Niederhalterlamelle 13, welche dem festen Kreissägeblatt 2 zugeordnet ist, ist im wesentlichen in derselben Weise aufgebaut wie die Niederhalterlamelle 9.

Sowohl die Niederhalterlamelle 9 als auch die Niederhalterlamelle 13 sind im Bereich ihrer Enden mit Bohrungen ausgestattet, durch die sich parallel zur Antriebswelle 1 erstreckende Führungsstangen 14 hindurcherstrecken. Diese Führungsstangen 14 tragen im Bereich der Lamellen 9 und 13 Rollen 15, die um den gleichen Betrag über die Unterkante 12 der Lamellen hinausragen, wie die Rollen 11 der Lamellen 9 bzw. 13.

Im Bereich ihrer Enden sind die Führungsstangen 14 am freien Ende von Pendelarmen 16 angelenkt, die ihrerseits in einer nicht näher dargestellten Weise am Gestell der Maschine gelagert sind.

Beim Betrieb drücken die Rollen 11 und 15 der Lamelle 9 und 13 auf die Oberseite eines Werkstückes 17, das über eine in der Zeichnung lediglich angedeutete Transportkette in Richtung des Pfeiles 18 mit einem vorbestimmten Vorschub zur Durchführung des Sägevorganges kontinuierlich durch die Maschine gefördert wird. Dadurch wird ein Abheben des Werkstückes 17 von der Transportkette beim Sägevorgang vermieden.

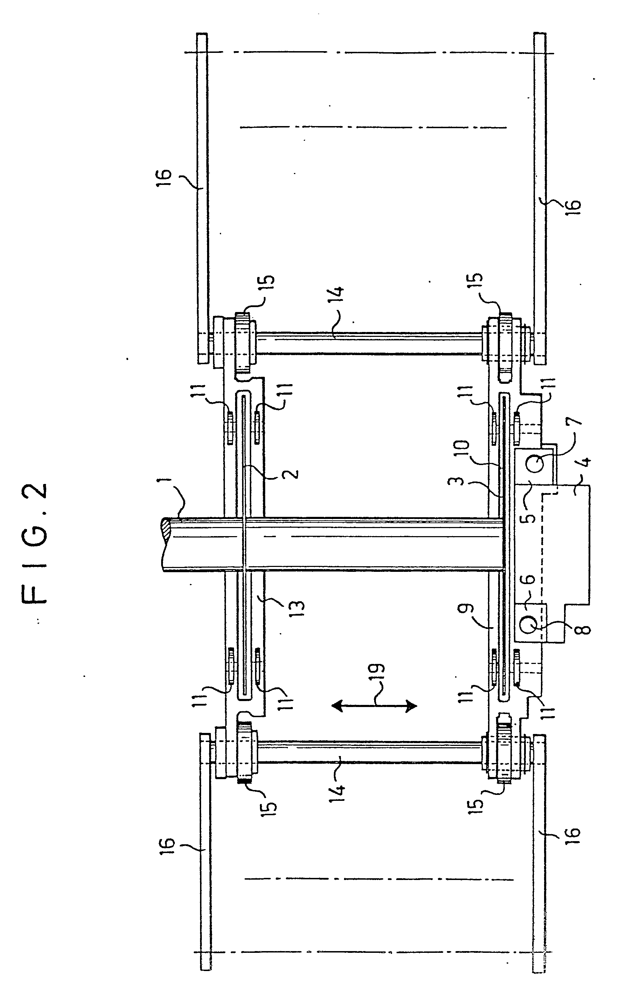

Soll nun der Abstand zwischen den Sägeblättern 2 und 3 zur Umstellung auf eine andere Sägebreite verändert werden, so muss der Verschiebekopf lediglich in Richtung des Pfeiles 19 (Fig. 2) verschoben und in seiner neuen Lage festgelegt werden. Aufgrund der erfindungsgemässen Konstruktion wird dabei nicht nur das Sägeblatt 3 sondern darüber hinaus auch die jeweilige Niederhalterlamelle 9 in die richtige neue Lage gebracht, ohne dass hierzu besondere Umstellarbeiten notwendig sind.

**Patentansprüche**

1. Mehrblattkreissägemaschine, mit mindestens zwei auf einer motorisch angetriebenen Welle in einem bestimmten Abstand zueinander drehfest angeordneten Kreissägeblättern, von denen mindestens eines über einen feststellbaren Verschiebekopf in Längsrichtung der Antriebswelle verschiebbar ist, einer sich unterhalb der Kreissägeblätter erstreckenden Transportkette zum kontinuierlichen Durchschub der zu sägenden Werkstücke (17), sowie einer die Werkstücke beim Sägevorgang am Abheben von der Transportkette hindernden Niederhaltereinrichtung, die für jedes Sägeblatt (2, 3) jeweils eine getrennte Niederhalterlamelle (9, 13) umfasst, welche mit dem jeweils zugeordneten Verschiebekopf (4) derart verbunden ist, dass sie zusammen mit diesem in eine bestimmte Stellung verschiebbar und in dieser Stellung feststellbar ist, dadurch gekennzeichnet, dass jede Niederhalterlamelle (9, 13) in an sich bekannter Weise einen in Lamellenlängsrichtung verlaufenden Schlitz (10) besitzt, durch den das jeweilige Sägeblatt (2, 3) hindurchragt, und dass die Niederhalterlamellen (9, 13) beidseitig des Sägeblattes mit jeweils mindestens einer Druckrolle (11) versehen sind und an zwei jeweils die Lamellenenden durchdringenden Führungsstangen (14) in Antriebswellenlängsrichtung geführt sind, welche sich parallel zur Antriebswelle (1) erstrecken und im Bereich ihrer Enden an Pendelarmen (16) angelenkt sind, die sich im wesentlichen senkrecht zu den Führungsstangen (14) erstrecken.

2. Maschine nach Anspruch 1, dadurch gekennzeichnet, dass im Bereich der Enden jeder Niederhalterlamelle (9, 13) an den Führungsstangen (14) in der Ebene des Sägeblattes (2, 3) jeweils eine zusätzliche Druckrolle (15) gelagert ist.

3. Maschine nach Anspruch 1 oder 2, dadurch gekennzeichnet, dass die Niederhalterlamellen (9, 13) mit dem Verschiebekopf (4) jeweils über zwei sich senkrecht zur Transportkettenebene erstreckenden Säulen (7, 8) verbunden sind, die zu beiden Seiten der Antriebswelle (1) jeweils in einer Säulenführung (5, 6) am Verschiebekopf (4) vertikal verschiebbar gelagert sind und jeweils an ihrem unteren Ende an der Niederhalterlamelle (9) befestigt sind.

## Claims

1. Multi-bladed circular saw machine having at least two circular saw blades arranged for rotation on a motor-driven shaft at a determined distance apart, at least one of which is displaceable by means of a securable displacement head in the longitudinal direction of the drive shaft, a transport chain extending beneath the circular saw blades for the continuous feed of the work pieces (17) to be sawn, and a hold-down device for preventing the work pieces from lifting off from the transport chain during the sawing process, which hold-down device comprises for each saw blade a respective separate hold-down plate, which is connected to the respectively assigned displacement head in such manner that together with this it is desplaceable into a determined position and is securable in this position, characterised in that each hold-down place (9, 13) has in a manner known per se a slot (10), running in the longitudinal direction of the plate, through which the respective saw blade (2, 3) extends, and in that the hold-down plates (9, 13) are provided on each side of the saw blade with in each case at least one pressure roller (11) and are guided in the longitudinal direction of the drive shaft on two guide rods (14) extending through the respective plate ends, which guide rods (14) extend parallel to the drive shaft (1) and are pivoted in the region of their ends on swing arms (16) which extend substantially perpendicularly to the guide rods (14).

2. Machine according to claim 1 characterised in that in the region of the ends of each hold-down plate (9, 13) on the guide rods (14) in each case an additional pressure roller (15) is mounted in the plane of the saw blade (2, 3).

3. Machine according to claim 1 or 2 characterised in that the hold-down plates (9, 13) are connected to the displacement head (4) in each case via two supports (7, 8) extending at right angles to the transport chain plane, which supports are mounted for displacement in the vertical direction on both sides of the drive shaft (1) in each case in a support guide (5, 6) on the displacement head (4) and in each case are secured on their lower end to the hold-down plate (9).

## Revendications

1. Machine de sciage à plusieurs lames circulaires, avec au moins deux lames de scie circulaires disposées à une distance déterminée l'une de l'autre et calées en rotation sur un arbre entraîné par un moteur, dont au moins une de ces scies est déplaçable dans le sens longitudinal de l'arbre d'entraînement grâce à une tête coulissante pouvant être bloquée en position, une chaîne transporteuse s'étendant en dessous des lames de scie circulaires pour assurer le défilement en continu des pièces d'œuvre à scier (17), ainsi qu'un dispositif de retenue empêchant les pièces de se soulever de la chaîne transporteuse pendant le sciage qui comprend pour chaque lame de scie (2, 3) une barre de retenue (9, 13) distincte réunie à la tête coulissante (4) qui lui est associée de façon à se déplacer avec elle pour coulisser jusqu'à une position déterminée et pouvoir être bloquée à cette position, caractérisée en ce que chaque barre de retenue (9, 13) présente de façon connue en soi une fente (10) s'étendant en sens longitudinal à travers laquelle passe la lame de scie (2, 3) correspondante, cependant que les barres de retenue (9, 13) sont pourvues sur les deux côtés de la lame de scie d'au moins un galet presseur (11), elles sont guidées dans le sens de la longueur de l'arbre moteur le long de deux tiges de guidage (14) traversant les extrémités des barres et s'étendant parallèlement à l'arbre moteur (1) et elles sont articulées au voisinage de leurs extrémités à des bras oscillants (16) qui s'étendent substantiellement perpendiculairement aux tiges de guidage (14).

2. Machine selon la revendication 1, caractérisée en ce que, dans la zone des extrémités de chaque barre de retenue (9, 13), un galet presseur (15) supplémentaire est monté sur les tiges de guidage (14) dans le plan de la lame de scie (2, 3).

3. Machine selon l'une quelconque des revendications 1, 2 caractérisée en ce que les barres de retenue (9, 13) sont reliées à la tête coulissante (4) au moyen de deux colonnes (7, 8) s'étendant perpendiculairement au plan de la chaîne transporteuse et qui sont montées sur les deux côtés de l'arbre moteur (1), chacune dans un fourreau de guidage (5, 6) de la tête (4) coulissante verticalement et fixées chacune par leur extrémité inférieure à la barre de retenue (9).

# F I G . 1

0 036 964

# FIG.2

0 036 964